# FASCICULE DE BREVET EUROPEEN

(11) **EP 0 937 827 B1**
(45) Date de publication et mention de la délivrance du brevet: **02.07.2003**
(21) Numéro de dépôt: 99400232.7
(22) Date de dépôt: 03.02.1999
(51) Int. Cl.: E02F 9/08, E02F 3/28, B62D 49/06, B60K 5/04, B60K 17/04, B60K 17/28, B60K 11/04, B60K 25/02, B60K 15/063

(54) **Véhicule automoteur à bras chargeur télescopique**
Autokraftfahrzeug mit teleskopischem Ladearm
Motor vehicle with telescopic loader arm

(30) Priorité: 20.02.1998 FR 9802061
(43) Date de publication de la demande: 25.08.1999
(73) Titulaire: MANITOU BF, F-44150 Ancenis (FR)
(72) Inventeur: Braud, Marcel-Claude, 49270 Champtoceaux (FR)
(74) Mandataire: Kaspar, Jean-Georges

(56) Documents cités:
- EP-A- 0 656 315
- EP-A- 0 863 264
- FR-A- 2 650 541
- US-A- 4 618 016

## Description

L'invention est relative à un véhicule automoteur à bras chargeur télescopique, du type comportant un châssis rigide porté par deux ponts avant et arrière munis de roues et une cabine de conduite montée sur ledit châssis rigide.

Le document EP-A-0 863 264 dont le contenu est compris dans l'état de la technique selon l'article 54(3)CBE décrit un tractopelle à bras chargeur télescopique comportant un châssis rigide porté par deux ponts avant et arrière munis de roues et une cabine de conduite montée sur ledit châssis rigide, dans lequel le support d'articulation du bras chargeur télescopique est disposé en avant de la cabine et sensiblement vers le milieu de la distance entre le pont avant et le pont arrière, ledit châssis portant extérieurement et latéralement, entre une roue avant et une roue arrière, d'un côté un compartiment contenant le moteur à combustion interne du véhicule et de l'autre un compartiment contenant au moins un réservoir de fluide embarqué et de plus du côté opposé au bras télescopique, une pelle excavatrice. La position du moteur, du réservoir et de la cabine par rapport aux châssis et au bras télescopique améliore la visibilité vers l'avant et la manoeuvrabilité du tractopelle.

Le document FR 2 103 955 décrit un véhicule à moteur, à usage agricole, pour la traction, la poussée et le portage d'outils et d'appareils. Ce véhicule est pourvu de deux essieux de traction disposés élastiquement sur un châssis et ayant des roues tractrices d'égale grandeur, dont l'entraînement est assuré par un moteur à combustion interne à plusieurs cylindres par l'intermédiaire d'un convertisseur de couple, et pourvu d'un dispositif de dérivation de puissance. Le moteur à combustion interne s'étend transversalement à l'axe longitudinal du véhicule.

Du fait que la cabine de conduite de ce véhicule se trouve partiellement dans la zone de l'extension verticale des roues avant, ce véhicule à usage agricole ne peut pas recevoir de bras chargeur télescopique en avant de cette cabine.

On connaît également des engins de manutention à usage agricole fabriqués et commercialisés par la Société de droit français MANITOU BF. Ces engins à usage agricole comportent un châssis articulé porté par deux ponts avant et arrière munis de roues et une cabine de conduite montée sur ledit châssis articulé. Le support d'articulation du bras chargeur télescopique est disposé en avant de la cabine et sensiblement vers le milieu de la distance entre l'essieu avant et l'essieu arrière. Du fait que le moteur à combustion interne est placé derrière la cabine et forme contrepoids, il n'est pas possible d'utiliser cet engin de manutention pour remplir des fonctions de tracteur agricole.

L'invention a pour but de remédier aux inconvénients de la technique connue, en proposant un nouveau véhicule automoteur à bras chargeur télescopique, pouvant être à la fois utilisé comme chariot de manutention à bras télescopique et comme tracteur agricole, grâce à une construction modulaire permettant une modification rapide des équipements arrière propres à un tracteur tout en fournissant une bonne accessibilité au groupe motopropulseur.

L'invention a pour objet un véhicule à bras chargeur télescopique du type comportant un châssis rigide porté par deux ponts avant et arrière munis de roues et une cabine de conduite montée sur ledit châssis rigide, dans lequel le support d'articulation du bras chargeur télescopique est disposé en avant de la cabine et sensiblement vers le milieu de la distance entre l'essieu avant et l'essieu arrière, caractérisé en ce que le châssis porte extérieurement et latéralement, entre une roue avant et une roue arrière, d'un côté un compartiment contenant un moteur à combustion interne, et de l'autre un compartiment contenant au moins un réservoir de fluide embarqué ; et en ce que le châssis présente, du côté opposé au bras télescopique des moyens de fixation aptes à recevoir au moins un équipement arrière.

Selon d'autres caractéristiques de l'invention :
- ledit moteur est orienté transversalement et relié à un renvoi d'angle dont une sortie entraîne une boîte de vitesses orientée longitudinalement et placée sensiblement en position centrale, sous le support du bras chargeur télescopique,
- le moteur est relié au renvoi d'angle par une transmission à cardans, ou alternativement le moteur est relié au renvoi d'angle par un arbre de connexion, notamment au moyen d'un arbre cannelé coopérant avec un manchon cannelé,
- avantageusement, au moins un équipement arrière est choisi dans le groupe comportant : un bloc de remorquage, un ensemble de relevage hydraulique, un bloc de prise de force relié par arbre à cardans audit renvoi d'angle,
- le véhicule comporte un moyen d'attelage, notamment un crochet de remorquage,
- le véhicule comporte un attelage à trois points comme moyen de levage arrière,
- le véhicule comporte un bloc de prise de force à entraînement mécanique, relié à et entraîné par ledit renvoi d'angle,
- le véhicule comporte au moins une pompe hydraulique entraînée par un arbre traversant la boîte de vitesses et constamment entraîné dès le démarrage du moteur,
- le bloc de prise de force à entraînement mécanique comporte un embrayage et un boîtier réducteur de vitesses,
- la cabine de conduite contient un poste de conduite réversible.

L'invention sera mieux comprise grâce à la description qui va suivre donnée à titre d'exemple non limitatif en référence aux dessins annexés dans lesquels :
- La figure 1, représente schématiquement en vue de dessus l'agencement cinématique d'un premier mode de réalisation de l'invention.
- La figure 2, représente schématiquement en vue de dessus l'agencement cinématique d'un deuxième mode de réalisation de l'invention.
- La figure 3, représente schématiquement une vue de dessus d'un mode de réalisation modulaire de l'invention, dans lequel le poste de conduite n'a pas été représenté.
- La figure 4, représente schématiquement une vue en élévation latérale du véhicule de la figure 3.
- Les figures 5 à 8 représentent schématiquement des vues en élévation latérale de variantes de réalisation du véhicule des figures 3 et 4.

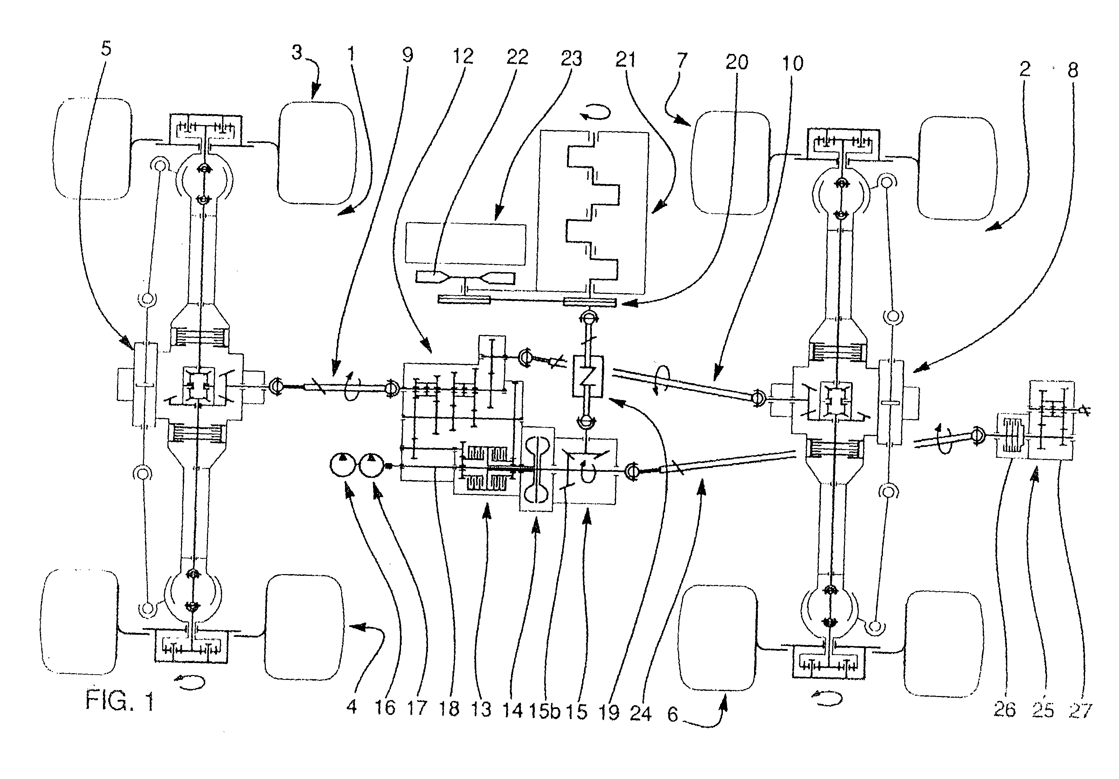

En référence à la figure 1, un premier mode de réalisation d'un véhicule selon l'invention comporte un agencement cinématique avec un pont avant 1 et un pont arrière 2. Le pont avant 1 est un pont à différentiel autobloquant à glissement limité, entraînant deux roues avant 3 et 4 motrices et directrices. La direction de l'essieu avant est une direction hydrostatique à vérin central 5 à double effet.

Le pont arrière 2 est un pont à différentiel autobloquant à glissement limité pour l'entraînement et l'orientation de deux roues arrière motrices et directrices 6 et 7. La direction de l'essieu arrière est également une direction hydrostatique à vérin central 8 à double effet.

L'entraînement de l'essieu avant 1 est assuré par l'intermédiaire d'un arbre à cardans 9, tandis que l'entraînement de l'essieu arrière 2 est assuré par l'intermédiaire d'un arbre à cardans 10. Les arbres à cardans 9 et 10 sont reliés à deux sorties correspondantes d'une boîte de vitesses 12 conçue de manière que les arbres à cardans 9 et 10 soient entraînés simultanément à la même vitesse lorsque le véhicule se déplace et pour que les arbres à cardans 9 et 10 soient immobilisés simultanément lorsque le véhicule est au repos.

La boîte de vitesses 12 est reliée à un inverseur 13 et à un convertisseur de couple ou un embrayage 14. L'inverseur 13, l'embrayage ou convertisseur 14, des pompes hydrauliques 16 et 17 sont entraînés simultanément par un arbre 18 solidaire en rotation d'un pignon 15b d'un renvoi d'angle 15. Le renvoi d'angle 15 est relié au volant d'inertie du moteur par un arbre à cardans 19. Le volant d'inertie 20 du moteur thermique 21, de préférence un moteur diesel porte également une poulie d'entraînement du ventilateur 22 de refroidissement du radiateur 23 à l'aide d'une transmission par courroie et poulies.

Avantageusement, le renvoi d'angle 15 est un renvoi d'angle du type à arbre traversant présentant une deuxième sortie d'entraînement d'un arbre à cardans 24 destiné à entraîner un bloc de prise de force 25 comportant un embrayage 26 de prise de force et un boîtier de prise de force 27 à deux rapports présentant deux arbres de sortie respectivement pour un régime nominal de 540 tours par minute et pour un régime nominal de 1000 tours par minute.

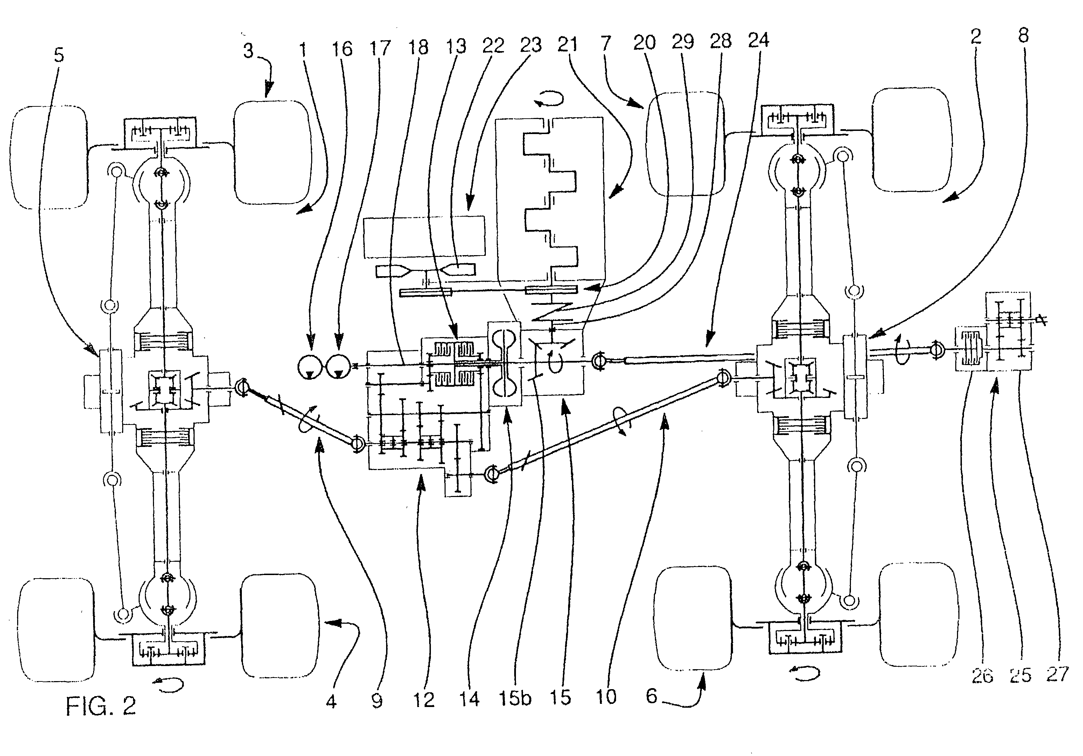

En référence à la figure 2, les éléments de références identiques aux références de la figure 1 sont identiques ou fonctionnellement équivalents aux éléments de la figure 1.

Dans ce deuxième mode de réalisation, l'entraînement du renvoi d'angle 15 à partie du volant d'inertie 20 du moteur 21 est assuré par l'intermédiaire d'un arbre 28 sensiblement coaxial à l'axe du vilebrequin du moteur 21. L'arbre 28 de connexion est avantageusement un arbre présentant une extrémité cannelée coopérant avec un accouplement élastique 29 solidaire du volant d'inertie 20 du moteur 21 à combustion interne.

Dans les deux modes de réalisation des figures 1 et 2, le véhicule automoteur à bras chargeur télescopique comporte un châssis rigide non représenté porté par le pont avant 1 muni de roues avant 3 et 4 et le pont arrière 2 muni de roues arrière 6 et 7. Le châssis rigide porte extérieurement et latéralement, entre la roue avant 3 et la roue arrière 7 un groupe motopropulseur comportant le moteur 21 à combustion interne ainsi que le radiateur 23 refroidi par le ventilateur 22 entraîné constamment dès le démarrage du moteur. Le moteur 21 est orienté transversalement et relié au renvoi d'angle 15 de manière à entraîner celui-ci en permanence dès le démarrage du moteur 21. Le renvoi d'angle présente une sortie entraînant un arbre 18 d'entrée dans la boîte de vitesses 12, cet arbre 18 entraînant également constamment dès le démarrage du moteur les pompes hydrauliques 16 et 17. La boîte de vitesses 12 est orientée longitudinalement parallèlement à l'axe longitudinal du véhicule et placée sensiblement en position centrale du véhicule.

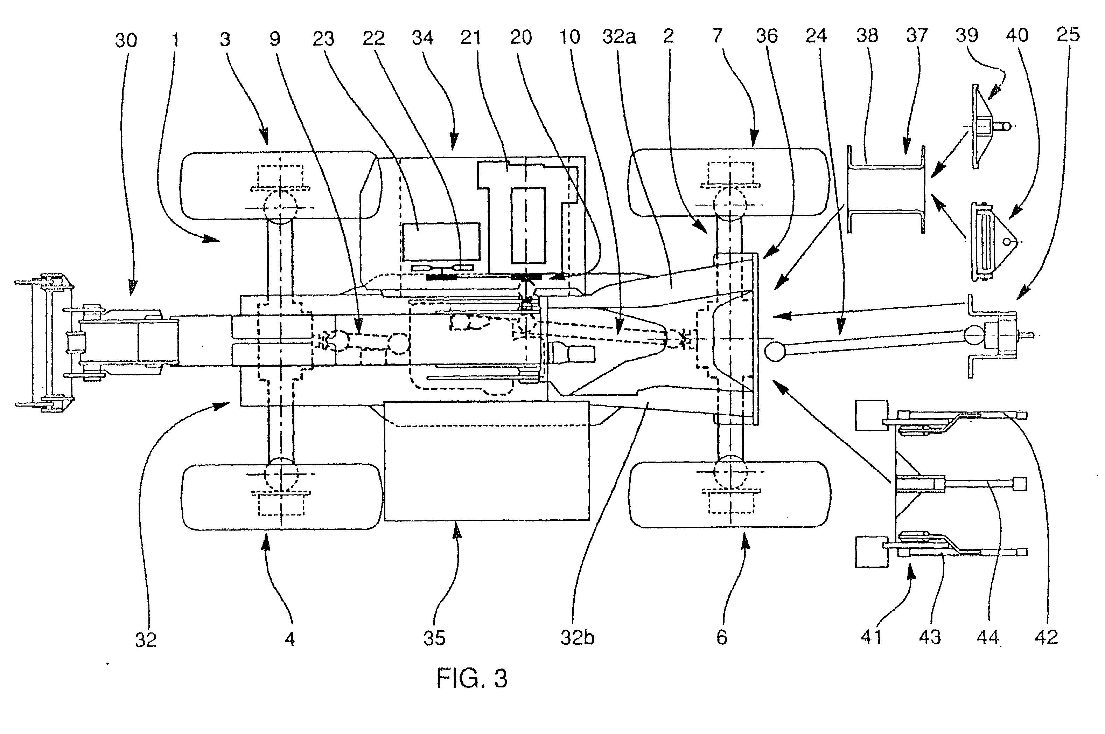

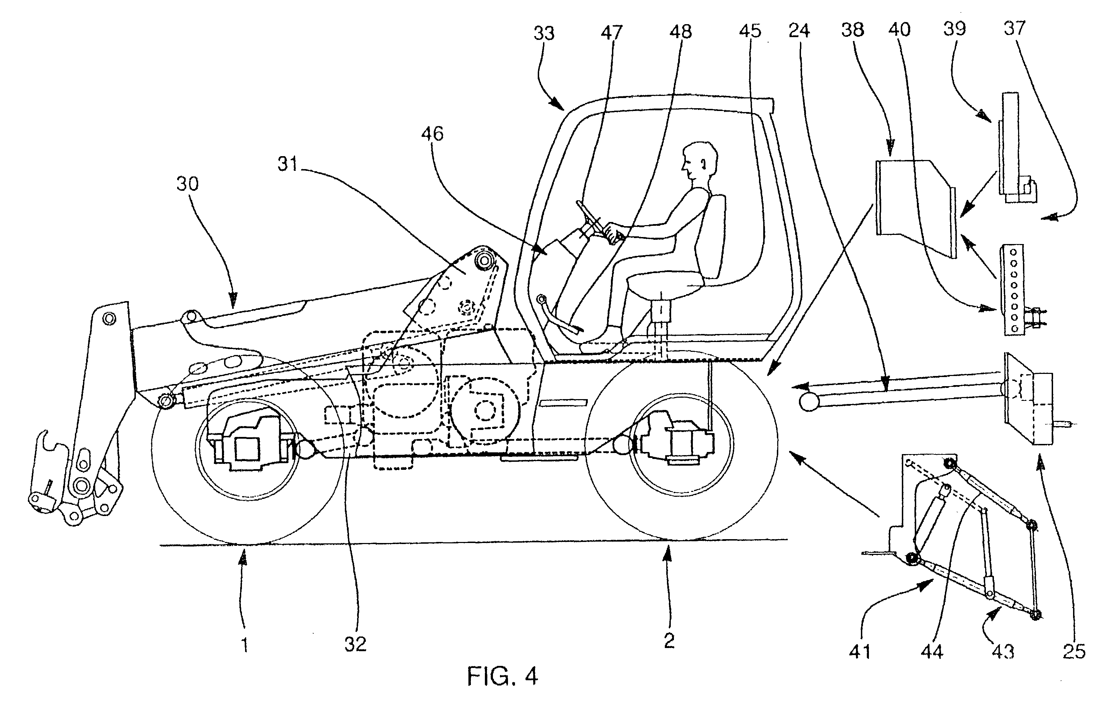

En référence aux figures 3 et 4, un véhicule constituant une variante préférée de mise en oeuvre de l'invention présente des éléments identiques ou fonctionnellement équivalents aux éléments du véhicule de la figure 1 et repérés par des références identiques à celles de la figure 1.

Le véhicule comporte un bras chargeur télescopique 30 monté à articulation sur un support 31 solidaire d'un châssis rigide 32 porté par le pont avant 1 et le pont arrière 2. Le support 31 d'articulation du bras chargeur 30 est disposé en avant d'une cabine 33, sensiblement vers le milieu de la distance comprise entre l'essieu avant 1 et l'essieu arrière 2. La cabine 33 au lieu d'être une cabine couverte peut être remplacée par un simple arceau, solidaire ou non du poste de conduite lorsque celui-ci est réversible. Le châssis 32 porte extérieurement et latéralement d'une part un compartiment 34 contenant le moteur diesel 21, le ventilateur 22 et le radiateur 23. Le compartiment 34 de groupe motopropulseur est situé latéralement entre la roue avant 1 et la roue arrière 7, en étant fixé extérieurement au châssis rigide 32. Le châssis rigide 32 porte latéralement et extérieurement du côté opposé au compartiment 34 un compartiment 35 contenant deux réservoirs de fluide embarqués (carburant, fluide hydraulique). La structure ainsi définie permet de concevoir une machine avec un châssis 32 court et étroit, ce qui assure une bonne maniabilité dans chacun des trois modes de conduite : un seul essieu directeur, deux essieux directeurs, ou un déplacement en crabe.

Avantageusement, le châssis 32 présente du côté opposé au bras télescopique 30, c'est-à-dire du côté de l'essieu arrière 2 des moyens de fixation modulaires. Les moyens de fixation modulaires comprennent avantageusement par une plaque verticale arrière 36 solidaire des longerons 32a et 32b du châssis 32. La plaque arrière 36 de fixation est avantageusement percée pour recevoir des moyens mécaniques de fixation par exemple par vissage de composants remplaçables et interchangeables.

Un premier composant modulaire remplaçable et interchangeable est par exemple un bloc de remorquage 37 comportant d'une part une extension arrière 38 à deux brides parallèles et un crochet de remorquage : soit un crochet hydraulique 39, ou un crochet mécanique 40 à réglage en hauteur au moyen d'une échelle.

Comme deuxième exemple de composant modulaire, on envisage un bloc 25 de prise de force associé à un arbre 24 d'entraînement à cardans. Ce bloc 25 de prise de force à entraînement mécanique comporte un embrayage 26 et un boîtier 27 réducteur de vitesse solidarisés l'un à l'autre.

Comme troisième type de composant mécanique modulaire et interchangeable, on envisage un attelage à trois points comme ensemble 41 de relevage hydraulique comportant de manière connue deux bras de relevage 42 et 43 et un troisième point 44.

Tous ces composants modulaires sont agencés pour être fixés au moyen de fixations mécaniques à la plaque 36. Le montage peut non seulement être effectué de manière remplaçable et interchangeable, mais également en combinant l'ensemble des composants modulaires précités, ou seulement certains d'entre eux, par exemple deux d'entre eux.

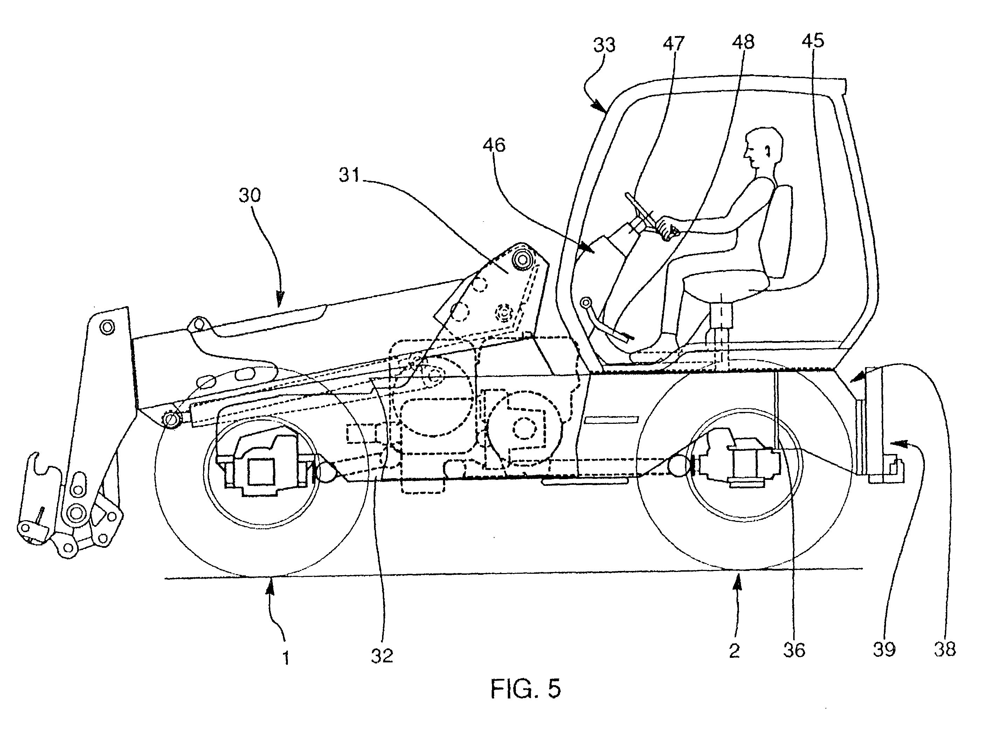

Le véhicule de la figure 5 comporte ainsi uniquement un moyen de remorquage constitué par un crochet hydraulique 39 monté sur le support d'extension 38 solidarisé à l'arrière du châssis 32 grâce au moyen de fixation à la plaque 36.

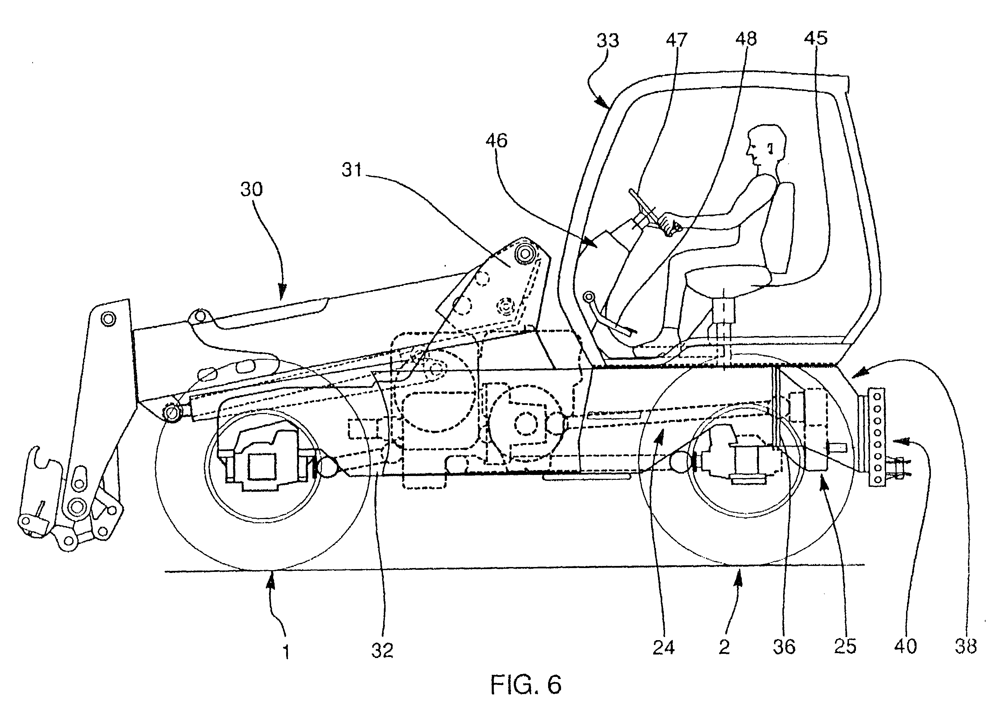

Le véhicule de la figure 6 comporte en combinaison un bloc de prise de force 25 entraîné au moyen d'un arbre à cardans 24 et un crochet mécanique 40 réglable en hauteur à la manière d'une échelle monté sur le support 38 d'extension arrière fixé au châssis 32 sur la plaque 36 de fixation arrière.

Dans une variante avantageuse de l'invention, la cabine 33 de conduite contient un poste de conduite réversible. Le poste de conduite réversible comporte un ensemble pivotant supportant le siège du conducteur, et tous les organes de conduite et de commande.

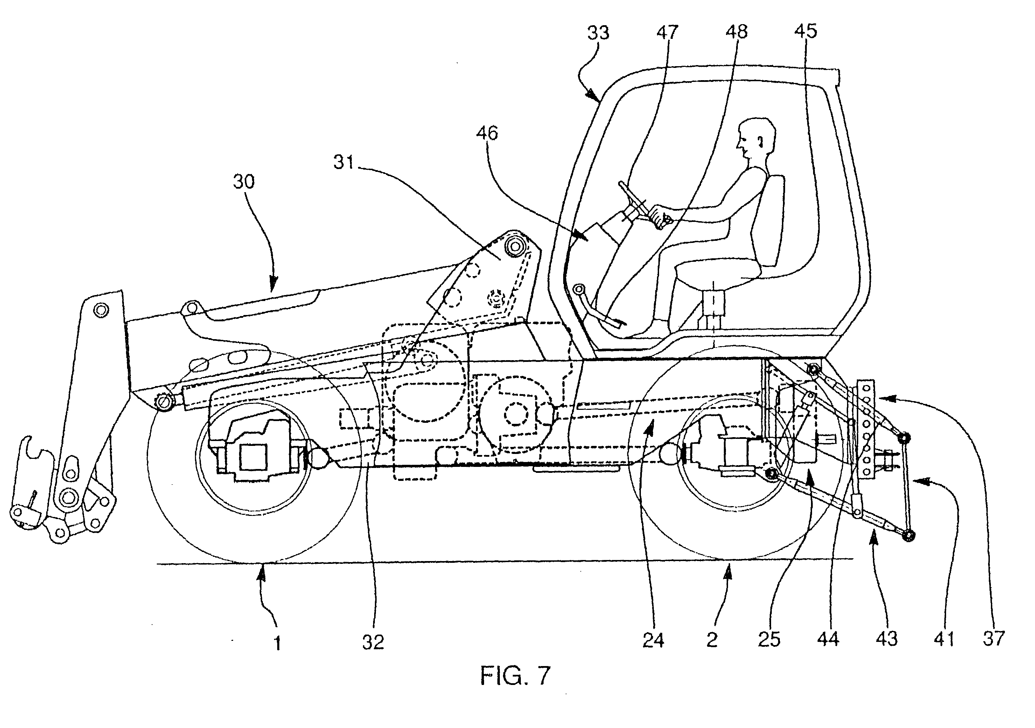

Ainsi, sur la figure 7, une variante de véhicule selon l'invention comporte un ensemble modulaire combinant les moyens de relevage 41 et le bloc de prise de force 25 entraîné par l'arbre à cardans 24. Le conducteur fait pivoter vers l'arrière l'ensemble précité avec le siège 45 et la console 46 comportant un volant de direction 47 et des pédales d'accélérateur et de freins 48 ainsi que d'autres leviers de commande non représentés, notamment de commande de relevage ou d'embrayage.

L'avantage de cette disposition est que le conducteur a constamment une vue directe sur les outils de travail fixés au relevage trois points 41 et entraînés par le bloc de prise de force 25. L'opération du véhicule selon l'invention est ainsi ergonomique et présente une sécurité améliorée.

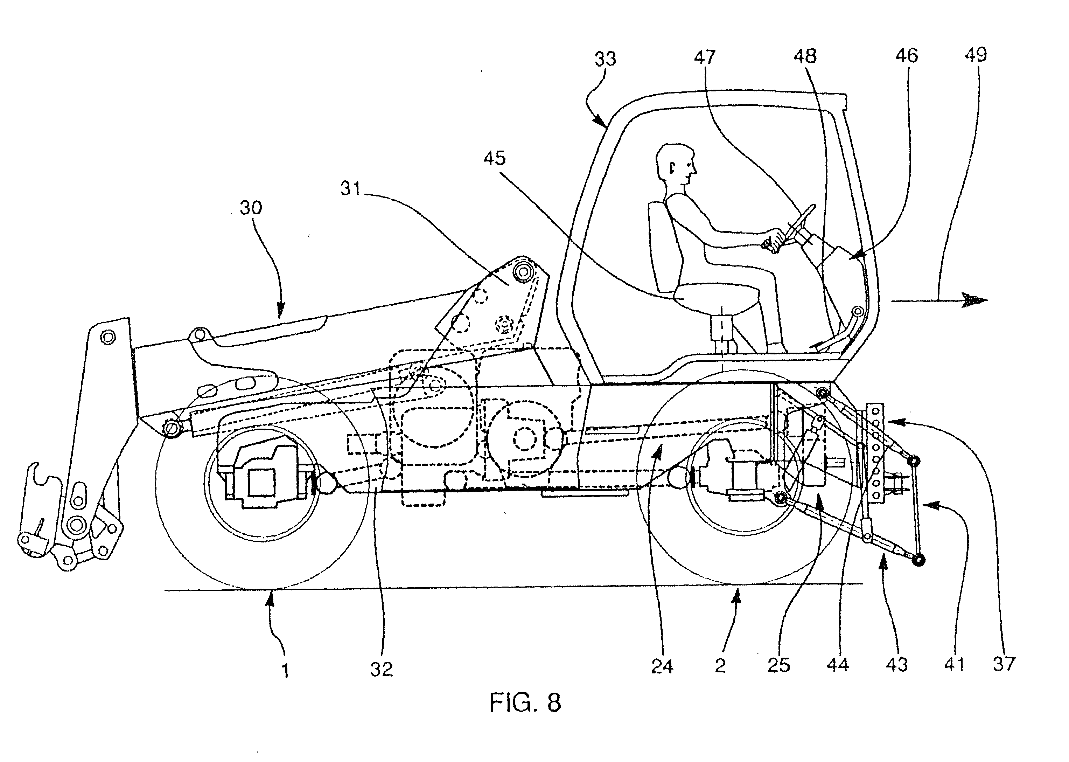

Le mode de réalisation de la figure 8 diffère de celui de la figure 7 par l'adjonction d'un moyen de remorquage 37 en combinaison avec le moyen de relevage 41 et le bloc de prise de force 25. Dans la position représentée, le conducteur peut facilement atteler un outil ou une remorque en manoeuvrant dans le sens de la flèche 49. Ensuite , en cours de transport sur route, l'opérateur inverse le poste de conduite réversible pour se déplacer dans le sens opposé à la flèche 49 ; il en est de même dans le cas d'une manutention à l'aide du bras chargeur télescopique 30.

L'invention décrite en référence à plusieurs modes de réalisation n'y est nullement limitée, mais couvre au contraire toute modification de forme et toute variante de réalisation dans le cadre défini par les revendications suivantes:

## Revendications

1. Véhicule à bras chargeur télescopique (30), du type comportant un châssis rigide (32) porté par deux ponts avant (1) et arrière (2) munis de roues (3, 4, 6, 7) et un poste de conduite muni d'une cabine (33) ou d'un simple arceau montée sur ledit châssis (32) rigide, dans lequel le support (31) d'articulation du bras (30) chargeur télescopique est disposé en avant de la cabine (33) et sensiblement vers le milieu de la distance entre le pont avant (1) et le pont arrière (2), dans lequel le châssis (32) porte extérieurement et latéralement, entre une roue avant (3) et une roue arrière (7), d'un côté un compartiment (34) comportant le moteur (21) à combustion interne du véhicule et de l'autre un compartiment (35) contenant au moins un réservoir de fluide embarqué, et dans lequel le châssis (32) présente, du côté opposé au bras télescopique (30), des moyens de fixation (36) aptes à recevoir au moins un équipement arrière choisi dans le groupe comportant : un bloc de remorquage (37) ; un attelage à trois points comme ensemble de relevage hydraulique comportant deux bras de relevage (42 et 43) et un troisième point (44) ; un bloc (25) de prise de force entraîné par un arbre à cardans (24).

2. Véhicule selon la revendication 1, **caractérisé en ce que** le moteur (21) est orienté transversalement et relié à un renvoi d'angle (15) dont une sortie entraîne une boîte de vitesses (12) orientée longitudinalement et placée sensiblement en position centrale, sous le support (31) du bras chargeur télescopique (30).

3. Véhicule selon la revendication 2, **caractérisé en ce que** le moteur (21) est relié au renvoi d'angle (15) par une transmission (19) à cardans.

4. Véhicule selon la revendication 2, **caractérisé en ce que** le moteur (21) est relié au renvoi d'angle (15) par un arbre de connexion, notamment au moyen d'un arbre cannelé (28) coopérant avec un manchon cannelé (29).

5. Véhicule selon la revendication 1, **caractérisé en ce que** le véhicule comporte un moyen d'attelage (37), notamment un crochet de remorquage (39 ou 40).

6. Véhicule selon la revendication 1, **caractérisé en ce que** le véhicule comporte un moyen (31) de levage arrière, notamment un relevage trois points.

7. Véhicule selon la revendication 2, **caractérisé en ce que** le véhicule comporte un bloc (25) de prise de force à entraînement mécanique, relié à et entraîné par ledit renvoi d'angle (15).

8. Véhicule selon l'une quelconque des revendications précédentes, **caractérisé en ce que** le véhicule comporte au moins une pompe hydraulique (16 ou 17) entraînée par un arbre (18) traversant la boîte de vitesses (12) et constamment entraînée dès le démarrage du moteur (21).

9. Véhicule selon la revendication 6, **caractérisé en ce que** le bloc (25) de prise de force à entraînement mécanique comporte un embrayage (26) et un boîtier (27) réducteur de vitesse.

10. Véhicule selon l'une quelconque des revendications précédentes, **caractérisé en ce que** la cabine (33) de conduite contient un poste conduite (45, 48) réversible.

## Patentansprüche

1. Fahrzeug mit Teleskopladearm (30) des Typs mit einem von einer angetriebenen Vorderachse (1) und einer angetriebenen Hinterachse (2) mit Rädern (3), (4), (6), (7) getragenen, starren Fahrgestell (32) mit einem auf dem starren Fahrgestell (32) angeordneten Führerstand mit einer Fahrerkabine (33) oder nur mit einem einfachen Bügel, wobei der Gelenkträger (31) des Teleskopladearms (30) vor der Fahrerkabine (33) und im wesentlichen in der Mitte des Abstandes zwischen der Vorderachse (1) und der Hinterachse (2) angeordnet ist, das Fahrgestell (32) seitlich außen zwischen einem Vorderrad (3) und einem Hinterrad (7) auf der einen Seite einen Aufnahmeraum (34) für die Verbrennungskraftmaschine (21) des Fahrzeugs und auf der anderen Seite einen Aufnahmeraum (35) für wenigstens einen Behälter für an Bord mitgenommene Flüssigkeit umfaßt und wobei das Fahrgestell (32) an der zum Teleskopladearm (30) entgegengesetzten Seite Befestigungseinrichtungen (36) aufweist, die dazu bestimmt sind, wenigstens eine hintere aus der Gruppe ausgewählte Ausrüstung, eine Schleppvorrichtung (37), eine hydraulische Dreipunktaufhängung mit zwei Hubarmen (42), (43) und einem Lenker (44), eine durch eine Kardanwelle (24) angetriebene Zapfwelleneinrichtung (25), aufzunehmen.

2. Fahrzeug nach Anspruch (1), **dadurch gekennzeichnet, daß** der Motor (21) quer angeordnet und mit einem Winkeltrieb (15) verbunden ist, dessen einer Ausgang ein in Längsrichtung und im wesentlichen in einer Zentralposition unter dem Gelenkträger (31) des Teleskopladearms (30) angeordnetes Schaltgetriebe (12) antreibt.

3. Fahrzeug nach Anspruch 2, **dadurch gekennzeichnet, daß** der Motor (21) mit dem Winkeltrieb (15) über einen Kardanantrieb (19) verbunden ist.

4. Fahrzeug nach Anspruch 2, **dadurch gekennzeichnet, daß** der Motor (21) mit dem Winkeltrieb (15) mittels einer Verbindungswelle, insbesondere mittels einer mit einer Keilmuffe (29) zusammen wirkenden Keilwelle (28) verbunden ist.

5. Fahrzeug nach Anspruch 1, **dadurch gekennzeichnet, daß** das Fahrzeug eine Schleppvorrichtung (37), insbesondere einen Schlepphaken (39 oder 40) aufweist.

6. Fahrzeug nach Anspruch 1, **dadurch gekennzeichnet, daß** das Fahrzeug eine hintere Hubvorrichtung (41), insbesondere eine Dreipunkthubvorrichtung aufweist.

7. Fahrzeug nach Anspruch 2, **dadurch gekennzeichnet, daß** das Fahrzeug eine Zapfwelleneinrichtung (25) mit mechanischem Antrieb aufweist, die mit dem Winkeltrieb (15) verbunden und dadurch angetrieben ist.

8. Fahrzeug nach einem der vorhergehenden Ansprüche, **dadurch gekennzeichnet, daß** das Fahrzeug wenigstens eine durch eine das Schaltgetriebe (12) durchquerende und ständig ab in Betriebnahme des Motors (21) angetriebene Welle (18) angetriebene Hydraulikpumpe (16 oder 17) aufweist.

9. Fahrzeug nach Anspruch 6, **dadurch gekennzeichnet, daß** die mechanisch angetriebene Zapfwelleneinrichtung (25) eine Kupplung (26) und ein Untersetzungsgetriebe (27) umfaßt.

10. Fahrzeug nach einem der vorhergehenden Ansprüche, **dadurch gekennzeichnet, daß** die Fahrerkabine (33) einen umkehrbaren Führerstand (45) einschließt.

## Claims

1. Vehicle with a telescopic loader arm (30), comprising a rigid chassis (32) carried by a front bridge (1) and a rear bridge (2) provided with wheels (3, 4, 6, 7) and a driver station provided with a cab (33) or a mere arch mounted on said rigid chassis (32), in which the support (31) for articulation of the telescopic loader arm (30) is disposed in front of the cab (33) and substantially midway between the front bridge (1) and rear bridge (2), wherein the chassis (32) carries externally and laterally, between one front wheel (3) and one rear wheel (7), on the one side, a compartment (34) comprising the internal combustion engine (21) of the vehicle, and on the other side, a compartment (35) containing at least one onboard fluid reservoir, and wherein the chassis (32) has, on the side remote from the telescopic arm (30), fixing means (36) for receiving at least one piece of rear equipment selected from the group comprising a towing unit (37), a three-point connection such as a hydraulic lift comprising two lifting arms (42 and 43) and a third point (44); a power take-off unit (25) driven by a cardan shaft (24).

2. Vehicle according to claim 1, **characterised in that** the engine (21) is oriented transversely and connected to an angled transmission (15) having an output driving a gearbox (12) oriented longitudinally and disposed substantially in a central position below the support (31) of the telescopic loader arm (30).

3. Vehicle according to claim 2, **characterised in that** the engine (21) is connected to the angled transmission (15) by a cardan transmission (19).

4. Vehicle according to claim 2, **characterised in that** the engine (21) is connected to the angled transmission (15) by a connecting shaft, in particular by a grooved shaft (28) cooperating with a grooved sleeve (29).

5. Vehicle according to claim 1, **characterised in that** the vehicle comprises a connection means (37) in the form of a towing hook (39 or 40).

6. Vehicle according to claim 1, **characterised in that** the vehicle comprises a rear lifting means (31) in the form of a three point lift.

7. Vehicle according to claim 2, **characterised in that** the vehicle comprises a power take-off unit (25) with a mechanical drive, connected to and driven by said angled transmission (15).

8. Vehicle according to any one of the preceding claims, **characterised in that** the vehicle comprises at least one hydraulic pump (16 or 17) driven by a shaft (18) passing through the gearbox (12) and driven continuously after starting of the engine (21).

9. Vehicle according to claim 6, **characterised in that** the power take-off unit (25) with a mechanical drive comprises a clutch (26) and a reduction gear housing (27).

10. Vehicle according to any one of the preceding claims, **characterised in that** the driver's cab (33) contains a reversible driver station (45, 48).
